# EUROPEAN PATENT SPECIFICATION

(11) **EP 0 832 177 B1**
(45) Date of publication and mention of the grant of the patent: **16.07.2003**
(21) Application number: 96914726.3
(22) Date of filing: 21.05.1996
(51) Int. Cl.: C12C 3/00, C12C 3/08, C12C 11/00

(54) **EXTRACT OF SPENT HOPS AND ITS USE**
HOPFENTREBEREXTRAKT UND DESSEN VERWENDUNG
EXTRAIT DE DRECHES DE HOUBLON ET SON UTILISATION

(30) Priority: 06.06.1995 US 469381
(43) Date of publication of application: 01.04.1998
(73) Proprietor: Miller Brewing Company, Milwaukee Wisconsin 53208 (US)
(72) Inventor: RADER, Sydney R., Fredonia, WI 53021 (US); TRIPP, Matthew L., Nashotah, WI 53058 (US); TING, Patrick L., Brookfield, WI 53005 (US); CHAUDHARY, Vinod K., Mequon, WI 53092 (US); GOLDSTEIN, Henry, Brookfield, WI 53005 (US); MIZERAK, Robert J., Oconomowoc, WI 53066 (US); RAO, Subba C., Brookfield, WI 53005 (US); RYDER, David S., Libertyville, IL 60048 (US); WILKINSON, Hetvin A., Wauwatosa, WI 53222 (US)
(74) Representative: Ebner von Eschenbach, Jennifer
(86) International application number: US9607325
(87) International publication number: WO96039480

(56) References cited:
- BE-A- 753 555
- GB-A- 189 406 243
- SU-A- 1 601 112
- MALTING AND BREWING SCIENCE, Volume I, 1981, D.E. BRIGGS et al., "Malt and Sweet Wort", page 6, XP002945310

## Description

### Technical Field

The present invention generally relates to adding a hop flavor to beverages. More particularly, it relates to a novel method of preparing a fully kettle hop flavored beverage and compositions for use in such method.

### Background Art

Hops, in the form of either the ground dried plant or pellets, are used in brewing to give the beverages, such as beer or ale, their characteristic bitter flavor and pleasant aroma. The hops usually are added to the boiling wort in the brewing kettle. Alternatively, if primarily a bitter flavor is desired, a hop extract can be added to the brewing kettle or an isomerized hop extract, if it is highly purified, may be added post kettle, i.e., after the wort has been boiled or after fermentation.

The primary hop constituents which are utilized in the brewing process are the alpha acids, the beta acids, the uncharacterized resins and the hop oils. The alpha acids are known as humulones and the beta acids are known as lupulones. The alpha acids are the precursors of the bitter substances in beer. The beta acids or lupulones have low solubility in wort and beer and they are believed to play a relatively minor role in the brewing process.

During brewing, chemical changes are made in the alpha acids or humulones resulting in the formation of compounds known as iso-alpha acids, i.e., isohumulone, isocohumulone and isoadhumulone. The alpha acids are extracted from the hops by the boiling wort and isomerized to the iso-alpha acids during the kettle boiling stage.

It is known that iso-alpha acids derived from hops or an unreduced hop extract which contains the iso-alpha acids can cause light instability in malt beverages. The exposure of such a beer or ale to light can result in the beverage becoming "light struck" and having a skunky odor. As a result, such beverages cannot be packaged in clear or green glass bottles without a risk of developing the "light struck" character.

Hop extracts have been used in brewing beer for a number of years. The reasons are severalfold. When whole hops are added to the kettle, the yield of iso-alpha acids is poor, e.g., 10-25% based on the alpha acids present in the hops. However, the conversion of alpha acids in a hop extract to iso-alpha acids can be very high, e.g. 80%. Furthermore, the utilization of the pure iso-alpha acids in a preisomerized extract which is added post kettle is known to be extremely high, e.g. 70-90%.

The predominant production of hop extracts consists of extracting the essential bittering acids from the cellulosic material of the hop blossom by the use of either organic solvents or carbon dioxide. The hops from which the alpha acids have been removed are generally referred to as "spent hops" (but hereinafter referred to as "hop solids") and they are discarded or sold as animal feed.

The hop extracts thus obtained can be added to the brewing kettle or chemically processed to isomerize and reduce the alpha acids. One disadvantage of the use of hop extracts is that not all the flavor components of the whole hops are completely extracted from the hops and the beverages which have been prepared using hop extracts do not have the "full" hop flavor of beverages made with whole hops.

A number of disadvantages to using hop extracts are noted. For example, the use of a CO₂ or hexane hop extract does not produce a light stable or fully kettle hopped beverage. Also, use of a processed CO₂ hop extract (to make "hydrohop") does not produce a fully kettle hopped beverage. However, it has been surprisingly discovered that the use of hop solids or an extract of hop solids produces a light stable, fully kettle hopped beverage.

Document SU A 1,601,112, issued to A. V. Lekhov et al., discloses a method for wort hopping to increase the fragrance of the wort and to reduce the production cost of beer. The method comprises adding waste from a CO₂ extraction as hops to boiling wort, boiling and then adding CO₂ extract to the beverage. This method is then used to prepare a better quality beer.

Document BE-753555 relates to the use of hop waste for brewing. The document discloses the use of hop residues in brewing beverages by drying and finely grinding to a powder or meal hop residues for addition to the vat. Preferably, the addition is made as free-flowing granules compounded with the resins and tannin extracts of hops. The document also discloses that after drying the hop residues the moisture content of the residues is 5%, maximum 10%, and that particle size after grinding is 0.05-1.0 mm, preferably 0.1-0.5 mm.

Document GB6,243, by J.C. Mewburn, discloses modes of treating and using certain waste products obtained in brewing. Mewburn discloses a process for recovering or obtaining the bitter matters and resins matters of hops from fermenting casks or tuns. Mewburn also discloses a process for producing these bitter matters and resins matters of hops in such forms that will allow for the direct use of these products in brewing or similar processes.

In Malting and Brewing Science, Volume 1 Malt and Sweet Wort, D.E. Briggs et al. (page 6) disclose a process wherein wort produced by mashing is boiled in a copper or kettle. The boiling process may be associated with the addition of sugars, materials encouraging coagulation of protein and tannin material, and hops or bitter products derived from hops. The process discusses the levels of alpha acids, beta acids and hop oils during boiling.

Parent U.S. Patent Application Serial No. 08/218,559 advantageously discloses a method of preparing a full hop flavored beverage using the hop solids which have historically been a by-product of the hop extraction process. It has now been surprisingly discovered that an extract of the hop solids itself can,be used to produce a beer judged to have a superior hop flavor.

### Disclosure Of The Invention

It is an object of the present invention to disclose a method for preparing a hop flavored beverage using an extract of the hop solids. The hop solids have in the past been a discarded by-product of a first hop extraction process.

It is a still further object to disclose novel beverages prepared by the method of the present invention.

It is a further object to disclose novel flavoring agents which comprise an extract of hop solids.

The present invention provides a method of making a hop flavored beverage from a fermentable growth media comprising the steps of adding to the media, prior to bio-conversion, an extract of hop solids as the sole hopping material; and bio-converting the media to form the hop flavored beverage, wherein the hop solids are the residue of a first extraction of hops to remove substantially all the alpha acids, beta acids, and hop oils, wherein the first extraction of hops is a CO₂ extraction of hops, and wherein the hop solids have no more than .3% w/w alpha acids.

The present invention also provides for a kettle hop flavored beer having enhanced light stability in a clear or green glass bottle prepared by the foregoing method, and for a hop flavored beverage prepared by the foregoing method.

The present invention also provides a method of making a hop flavored beverage from a fermentable growth media comprising the steps of bio-converting the media; and adding to the converted media a fermented water extract of hop solids as the sole hopping material, wherein the hop solids are the residue of a first extraction of hops to remove substantially all the alpha acids, beta acids, and hop oils, wherein the first extraction of hops is a CO₂ extraction of hops, and wherein the hop solids have no more than .3% w/w alpha acids. The present method also provides for a hop flavored beverage prepared by the foregoing method.

The present invention also provides a hop flavoring agent for beverages consisting of an extract of hop solids, wherein the hop solids are the residue of a first extraction of hops to remove substantially all the alpha acids, beta acids, and hop oils, wherein the first extraction of hops is a CO₂ extraction of hops, and wherein the hop solids have no more than .3% w/w alpha acids.

Important advantages of the present invention are that it makes possible the preparation of a fully kettle hop flavored beverage which was previously unavailable and that such a beverage can be prepared using a byproduct of hop solids which is itself an inexpensive and previously discarded byproduct.

A surprising aspect of the present invention is that an extract of the hop solids, in which most of the alpha acids have been removed, can be used in a method of adding a bitter flavor to beverages.

### Best Modes For Carrying Out The Invention

Hop solids are those which remain after a hop extract containing substantially all of the alpha acids, beta acids, and hop oils has been removed from hops, preferably by the liquid carbon dioxide (CO₂) extraction of ground hops or hop pellets. The hop solids are then added in an effective amount to a wort in a brewing kettle prior to or during. the boiling of the wort. The wort is then fermented. If additional bittering is desired, a source of isomerized and reduced alpha acids is added before or after fermenting to obtain a light stable beverage with a full hop flavor.

To determine the scope and effectiveness of the present invention experimental work was performed using a CO₂ extract, hop solids, α-acids, β-acids, and HCF prepared from Cascade hop pellets. Supercritical CO₂, ethanol, and caustic extracts were also evaluated. Each fraction was evaluated for its contribution to kettle hop flavor. As a result, it was found that the hop solids effectively imparts a conventional full hop flavor to beer. The results of sensory evaluation confirmed that beverages made with hop solids had a hop flavor similar to that of beverages made using hop pellets. The tests also confirmed that the beer made with the hop solids could be packaged in the clear white (flint glass) or green bottles.

By hop solids we mean the hops which remain after substantially all of the alpha acids, beta acids, and hop oils have been extracted (in whole or in part) from whole hops with a fluid, such as liquid carbon dioxide, supercritical carbon dioxide. Generally, hop solids can be the residue remaining after any extraction of hops to remove substantially all of the alpha acids, beta acids, and/or hop oil. The hop solids which undergo further extraction for use in the methods and as the hop flavoring agent of the present invention are the residue of a CO₂ extraction and have no more than 0.3% w/w alpha acids. The hop solids, alpha-acids and Hop Character Fraction (HCF) can be obtained from whole hops by a process that can be illustrated as follows:

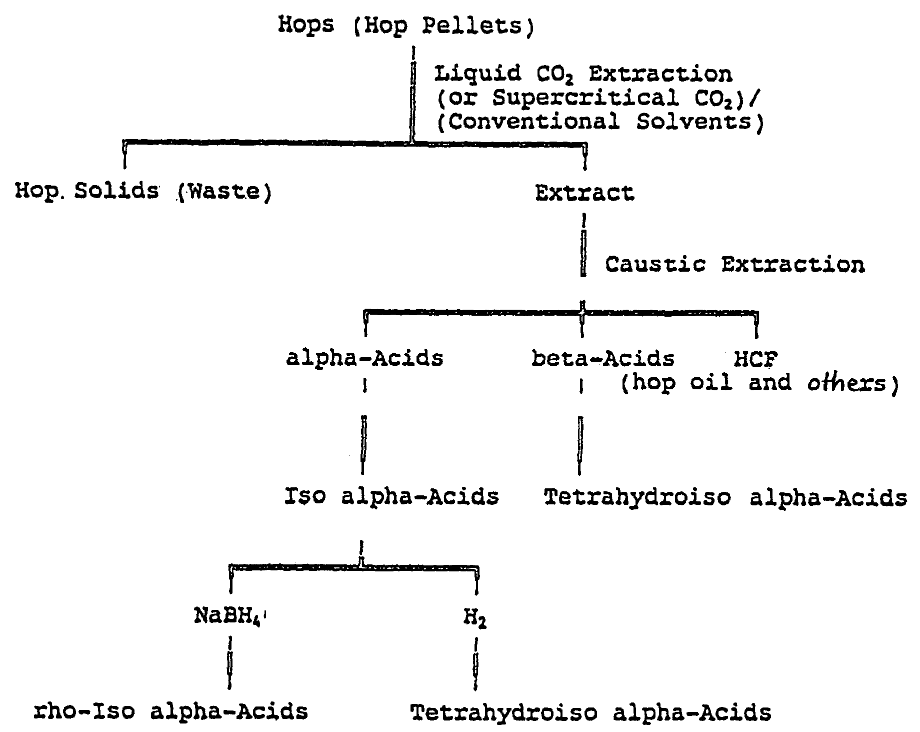

The following is a brief description of the experimental tests performed and the materials employed.

### Example 1 (Not within scope of appended claims.)

Brews were conducted in a pilot plant with the hop variations as shown in Table 1. All hopping materials were added to the unhopped brewery wort 45 min. before the completion of boiling (knock-out). The amounts to be added were calculated based on the bitterness values (BU) of alpha acids they contained. The amounts of the material that do not contain alpha acids were added in amounts roughly equivalent to the amounts of alpha acids originally in the pellets.

**Table 1.**

| **Descriptions and BU Results of Pilot Plant Brewed Beers** | | | | |
|---|---|---|---|---|
| **Pilot. Brew No.** | **Hopping Material** | **Addition Rate** | **BU (Primary)** | **BU (Diluted)** |
| 1 | Pellets | 1200mg/L | 40.1 | 30.2 |
| 2 | LCO₂ Extract | 200mg/L | 27.1 | 19.4 |
| 3 | SuperCO₂ Extract | 200mg/L | 14.3 | 9.6 |
| 4 | β-Rich Fraction | 166mg/L | 5.7 | 4.2 |
| 5 | HCF | 166mg/L | 3.0 | 2.2 |
| 6 | Hop Solids | 1200mg/L | 15 | 10.5 |
| 7 | Caustic Extract | 1200mg/L | 3.9 | 2.8 |
| * The diluted beer means the primary beer was diluted with diluent to 6.5% w/w alcohol. | | | | |
| * Pilot Brews 3 to 7 had insufficient bitterness and as a result were spiked with a light stable hop extract to achieve sensorially 20 BU. | | | | |

These experiments with supercritical CO₂ extract (Pilot Brew No. 3) and caustic extract (Pilot Brew No. 7) were not successful due to insufficient quantities and α-acids contents, but their effects on the kettle hop flavors in the beer were explored.

Three sensory evaluations were performed on the Pilot Brews by a taste panel. Results are summarized below.
1. A QDA method was used for all special samples (No. 2 to No. 6) against the control (pellet hopped No. 1). The QDA procedure is described in detail in McCredy, J.M. et al, Food Technology, 28, 36-41 (1974). Sensory results indicated that the control had significantly stronger kettle hop flavors than the other brews. One possible explanation is that the flavor strength of the individual fraction in the specials (No. 2 to No. 6) is unequal to the whole hop pellets. It is worth noting that the 30 BU value for No. 1 was much greater than all the specials.
2. An alternative QDA paired comparison was performed; each special sample was tasted versus a beer produced with no kettle hopping (NKH). Results in four categories are summarized in Table 2.

**Table 2.**

| **Sensory Results Pilot Brews vs. Control in Level of Significance** | | | | | |
|---|---|---|---|---|---|
| **Pilot Brew** | **Description** | **Aroma Strength** | **Fruity/ Estery** | **Hop Character** | **Aftertaste** |
| No. 2 | CO₂ Extract | NSD | 95.0% | NSD | 99.0% |
| No. 4 | β-Rich Fraction | NSD | 99.9% | 99.0% | 95.0% |
| No. 5 | HCF | 99.9% | 99.9% | 99.9% | 99.9% |
| No. 6 | Hop Solids | 99.9% | 99.9% | 99.9% | 95.0% |

Interestingly, of the four attributes tested the panel perceived significant differences in fruity/estery, hop character, and aftertaste in Pilot Brew No. 5 (with HCF) and Pilot Brew No. 6 (with Hop solids).
3. An eight member round table panel was asked to describe the differences between the three samples (Nos. 2, 5, and 6). The panel found that the Pilot Brew No. 6 (with Hop solids) had kettle hop flavors. It was described as having a moderate hop aroma and hoppy taste. The Pilot Brew No. 5 (with HCF) was described as having a green hop/hop oil aroma. While Pilot Brew No. 2 (with CO₂ extract) was found to have a low hop aroma and a moderate hoppy taste.

The test results indicate that hop solids, a waste material from extraction of hops, can be used to impart the kettle hop flavor to beer. Sensory results (both QDA and round table methods) demonstrated that beers brewed with Cascade hop solids (Pilot Brew No. 6) had a moderate level of kettle hop flavors. The beer brewed with HCF had the most hop aroma but not kettle hop aroma. Application of hop solids alone or blended with a specific variety of HCF produces a specific kettle hop flavor similar to that produced by hop pellets added in the kettle. Since hop solids and HCF do not contain alpha acids, beers brewed with these materials can be prepared and packaged in the clear white or green bottles.

Additionally, the sample brewed with hop solids had 10.5 BU of non-iso-α-acids measured by UV (normal BU method). HPLC analysis of the beer indicated that there were no iso-α-acids present and the BU values were contributed by non-iso-α-acids. These values are significant and greater than the expected background of 2-3 BU. The BU values of beer brewed with liquid CO₂ extract (Pilot Brew No. 2) or α-acids gave a true BU value (of iso-α-acids).

### Example 2 (Not within scope of appended claims).

### Hop Flavors and Light Stability of Pilot Beers Brewed with Reconstructed Hop Pellets

Five types of reconstructed hop pellets were prepared by blending hop solids with water and various fractions of a CO₂ hop extract and forming the mixture into pellets using a pelletizer.
1. Hop solids + CO₂ extract
2. Hop solids + α-acids
3. Hop solids + β-acids
4. Hop solids + HCF
5. Hop solids

The Pilot Brews shown in Table 3 were prepared using the procedure described in Example 1.

**Table 3**

| **Pilot Brew No.** | **Addition Rate of Reconstructed Hop Pellets to Brewery Wort** | **BU (Primary)** | **BU (Diluted)** |
|---|---|---|---|
| 8 | Hop Solids (2.25 g/L) + CO₂ Extract (0.4 g/L) | 38.6 | 28.7 |
| 9 | Hop Solids (2.25 g/L) + α-Acids (0.175 g/L) | 30.2 | 21.3 |
| 10 | Hop Solids (2.25 g/L) + HCF (0.065 g/L) | 12.8 | 8.9 |
| 11 | Hop Solids (2.25 g/L) | 11.3 | 8.0 |
| 12 | Hop Solids (2.25 g/L) + β-Acids (0.248 g/L) | 15.0 | 10.7 |
| 13 | Hop Pellets (1.5 g/L) | 31.2 | 22.1 |

All the beers were targeted for 20 BU. As a result, some beers with insufficient BU were spiked with light stable hop extract to achieve sensorially 20 BU. The diluted beer was the primary beer diluted with diluent water to 3.65% w/w of alcohol level. The CO₂ extract was a hop extract made by liquid CO₂ extraction which contained 39.56% α-acids and 44.11% β-acids.

### Hop Flavor Evaluation

Pilot Brews 8 through 12 were each evaluated with the control pilot brew (No. 13) and a beer produced with no kettle hopping (NKH). Each evaluation involved monadic sequential testing using the QDA method. Samples were rated on aroma strength, fruity/estery character, hop character and bitterness. The results are shown in Tables 4 to 8. The following significant differences were found:
(a) Cascade Hop solids + CO₂ Extract (Pilot Brew No. 8) had more hop character than the control (No. 13). It also had more aroma strength, fruity/estery character, hop character and bitterness than the NKH beer.
(b) Cascade Hop Solids + Alpha Acids (Pilot Brew No. 9) was not significantly different in the four attributes than the control beer (No. 13). Pilot Brew No. 9 had more aroma strength, fruity/estery character, hop character and bitterness than the NKH beer.
(c) Cascade Hop Solids + HCF (Pilot Brew No. 10) was not significantly different in the four attributes than the control beer (No. 13). Pilot Brew No. 10 had more aroma strength, fruity/estery character and hop character than the NKH beer.
(d) Cascade Hop Solids Only (Pilot Brew No. 11) was not significantly different in the four attributes than the control beer (No. 13). Pilot Brew No. 11 had more aroma strength, fruity/estery character and hop character than the NKH beer.
(e) Cascade Hop Solids + Beta Acids (Pilot Brew No. 12) had more hop character than the control beer (No. 13). Pilot Brew No. 12 had more aroma strength, fruity/estery character and hop character than the NKH beer.

**Table 4**

| **Mean*** | | | | | |
|---|---|---|---|---|---|
| **Characteristic** | **P.B.No.8** | **P.B.No.13** | **NKH** | **F-Value** | **Level of Significance** |
| Aroma Strength | 15.4^{a} | 13.6^{ab} | 12.7^{b} | 3.52 | 95.0% |
| Fruity/Estery | 12.8^{a} | 11.1^{a} | 8.4^{b} | 9.12 | 99.9% |
| Hop Character | 14.0^{a} | 11.1^{b} | 7.2^{c} | 16.47 | 99.9% |
| Bitterness | 13.3^{a} | 13.3^{a} | 10.6^{b} | 4.68 | 95.0% |
| N = 20 | | | | | |
| Comments: P.B. No. 8 - grapefruit - 3 panelists | | | | | |
| * Mean scores sharing a common letter are not significantly different at the 95% level. | | | | | |

**Table 5**

| **Mean*** | | | | | |
|---|---|---|---|---|---|
| **Characteristic** | **P.B.No.9** | **P.B.No.13** | **NKH** | **F-Value** | **Level of Significance** |
| Aroma Strength | 13.3^{a} | 12.7^{ab} | 11.6^{b} | 4.27 | 95.0% |
| Fruity/Estery | 11.2^{a} | 10.5^{a} | 8.3^{b} | 8.81 | 99.9% |
| Hop Character | 11.2^{a} | 11.1^{a} | 8.6^{b} | 6.73 | 99.0% |
| Bitterness | 13.0^{a} | 12.9^{a} | 10.6^{b} | 7.18 | 99.9% |
| N = 37 | | | | | |
| Comments: P.B. No. 9 - grapefruit - 2 panelists | | | | | |
| * Mean scores sharing a common letter are not significantly different at the 95% level. | | | | | |

**Table 6**

| **Mean*** | | | | | |
|---|---|---|---|---|---|
| **Characteristic** | **P.B.No.10** | **P.B.No.13** | **NKH** | **F-Value** | **Level of Significance** |
| Aroma Strength | 12.8^{a} | 11.9^{ab} | 10.9^{b} | 3.02 | 95.0% |
| Fruity/Estery | 10.6^{a} | 9.5^{a} | 7.3^{b} | 7.77 | 99.9% |
| Hop Character | 11.3^{a} | 10.6^{a} | 8.0^{b} | 7.89 | 99.9% |
| Bitterness | 11.2^{ab} | 12.8^{a} | 10.2^{b} | 4.30 | 95.0% |
| N = 25 | | | | | |
| Comments: P.B. No. 10 - grapefruit/citrus - 5 panelists | | | | | |
| * Mean scores sharing a common letter are not significantly different at the 95% level. | | | | | |

**Table 7**

| **Mean*** | | | | | |
|---|---|---|---|---|---|
| **Characteristic** | **P.B.No.11** | **P.B.No.13** | **NKH** | **F-Value** | **Level of Significance** |
| Aroma Strength | 13.4^{a} | 12.9^{ab} | 11.8^{b} | 3.68 | 95.0% |
| Fruity/Estery | 12.2^{a} | 11.0^{a} | 8.0^{b} | 10.51 | 99.9% |
| Hop Character | 11.0^{a} | 10.5^{a} | 8.2^{b} | 5.31 | 99.0% |
| Bitterness | 11.3^{ab} | 12.5^{a} | 10.5^{b} | 3.05 | 95.0% |
| N = 25 | | | | | |
| Comments: P.B. No. 11 - grapefruit/citrus - 6 panelists P.B. No. 13 - green hop/dry hop - 2 panelists | | | | | |
| * Mean scores sharing a common letter are not significantly different at the 95% level. | | | | | |

**Table 8**

| **Mean*** | | | | | |
|---|---|---|---|---|---|
| **Characteristic** | **P.B.No.12** | **P.B.No.13** | **NKH** | **F-Value** | **Level of Significance** |
| Aroma Strength | 13.8^{a} | 12.2^{ab} | 11.8^{b} | 3.72 | 95.0% |
| Fruity/Estery | 11.1^{a} | 9.6^{ab} | 8.2^{b} | 3.64 | 95.0% |
| Hop Character | 12.5^{a} | 9.9^{b} | 8.9^{b} | 7.08 | 99.0% |
| Bitterness | 11.3ab | 12.3^{a} | 10.3^{b} | 3.19 | 95.0% |
| N = 20 | | | | | |

| | | | | | |
|---|---|---|---|---|---|
| * Mean scores sharing a common letter are not significantly different at the 95% level. | | | | | |

The Pilot Brews No. 10, No. 11 and No. 13 also were evaluated against a control which was a beer produced with no kettle hopping (NKH) by a round table panel.

An eight member round table panel were asked to describe the differences in hop aroma and hop flavor. The results are reported in Table 9.

The panel found the control to have the least aroma, low hop aroma and low bitterness. The pilot brew formulated with Cascade hop solids and HCF (Pilot Brew No. 10) was found to have the most aroma and hop aroma. It was described as the fruitiest of the four products with a pineapple/grapefruit character and a moderate bitterness. The pilot brew formulated with Cascade hop solids (P.B. No. 11) and the pilot brew formulated with Cascade hop pellets (P.B. No. 13) both had a grapefruit/citrus character, a moderate hop character and a moderately strong bitterness. They both were perceived as being more bitter than P.B. No. 10 and the control.

**Table 9**

| Round Table Results | | | | |
|---|---|---|---|---|
| **Hop Characteristics** | **Control** | **Hop Solids + HCF P.B. No. 10** | **Hop Solids P.B. No. 11** | **Hop Pellets P.B. No. 13** |
| Aroma | least aroma | most aroma | | |
| | | most fruity | | |
| | | pineapple/grapefruit | grapefruit/ citrus | grapefruit/ citrus |
| | low hop aroma | most hop aroma | moderate hop aroma | moderate hop aroma |
| Flavor | low bitterness | moderate bitterness | moderately strong bitterness | moderately strong bitterness |

### Light Stability Evaluation

A 10-day light stability test on the above beers was conducted by a taste panel (6 people). The samples packaged in sealed clear bottles were placed in open low-side six pack carriers and set under 25 foot-candles of fluorescent light. At the end of a 10-day period, the samples were evaluated for the degree of light struck character, which is evidenced by the presence of a skunky odor.

Pilot Brew Nos. 10 and 11 did not produce the light struck character while Pilot Brew Nos. 8, 9, and 13 produced significant amounts of light struck character. However, Pilot Brew No. 12 gave a slight light struck character. It might be due to residual amounts of alpha acids present in the beta acids.

### Description Of The Preferred Embodiments

By a fermentable growth media we mean (1) a conventional wort, or (2) any minimal media containing Difco yeast N base (.8 - 8g/1, preferably 1.7 g/1) and glucose (1 - 20% by weight, preferably 8 - 10%), or any combination of (1) and (2). By bio-converting we mean a fermentation process whereby hop solids extract is converted to kettle hop flavor wherein glucose is present and the yeast is at a fermentable temperature.

### 1. Ethanol Extract of Hop Solids

### Example 3

The further aspect of the present invention of using an extract of hop solids (the hop solids being the residue of a first extraction of hops to remove the alpha acids) to make a hop flavored beverage results in a beverage which is rich in positive hop components (fruity, estery, hoppy) and devoid of negative ones (dry hop, green, tea-like, hop oil-like). Various components of cascade hops (whole pellet; CO₂ extract; HCF fraction of CO₂ extract) were investigated to evaluate their capacity to deliver kettle hop flavor to a finished brew.

Sensory panels concluded that no significant level of kettle hop flavor was associated with any CO₂ extract or fraction thereof. This lead to the conclusion that the component responsible for kettle hop flavor must still reside in the spent (CO₂ extracted) hop. Using the CO₂ extracted hop solids to make a hop flavored beverage confirmed that it indeed contained the precursor material which is converted during fermentation into "kettle hop flavor". See Example 1 and Table 2, supra.

CO₂ extracted hop solids is typically in the form of dust which makes it difficult to handle. One option explored was solvent extracting the dust so that the important hop flavor components could be delivered as an easily handled liquid. Thus, ethanol was employed as a solvent to extract spent Cascade and spent Galena hop solids.

Referring now to Table 10, several 37.85 litre (10 gallon) lab brews were made using the ethanol extract from hop solids and the brews were then evaluated. A pale malt beverage product with the special ethanol extract (PPI-03-112894) was submitted for sensory testing (colum 2). The product was monadically evaluated by fifteen panelists who routinely evaluate interplant beverage samples. Nine flavor attributes were rated in replicate using the QDA method. Mean scores are based on a 24-point linear scale.

The results are given below. Compared to a low hop flavored pale malt beverage (column 3), this product has more aroma strength, fruity/estery character, hop character, diacetyl character and aftertaste than typically found for a low hop flavor pale lager beverage.

**Table 10**

| Characteristic | Ethanol Extract Flavored Pale Lager Beer (Mean Score) | Low Hop Flavor Pale Lager Beer (Mean Score) |
|---|---|---|
| Aroma Strength | 14.0 | 11.8 |
| Fruity/Estery | 11.8 | 9.2 |
| Hop Character | 10.4 | 8.5 |
| Malty/Grainy | 7.8 | N/A |
| Sulphidic/tic | 5.7 | 5.3 |
| Diacetyl | 4.8 | 3.7 |
| Bitterness | 11.0 | 10.6 |
| Body | 11.3 | N/A |
| Aftertaste | 12.0 | 10.8 |
| Comments: fruity/estery - 3 panelists | | |

The evaluation showed that a most pleasant estery hop flavor was produced using the ethanol extract and was judged more pleasurable than using hop solids alone. This lead to the understanding that ethanol extraction removes the most pleasant attributes from hop solids, but not the negative ones.

This observation was confirmed by evaluating brews made with (1) hop solids; (2) ethanol extracted hop solids; and (3) ethanol extract of hop solids. The brew with hop solids (1) had a typical cascade kettle hop flavor. The brew with ethanol extracted hop solids (2) had a distinct dry hop flavor lacking in fruity, estery attributes. The brew with the ethanol extract of hop solids (3) had an unusually pleasant fruity/estery/hoppy flavor and aroma which is prized in hop flavored beverages (see Table 10). By dry hop flavor we mean any flavor derived from adding hops post-fermentation.

Although ethanol is the most preferred solvent for extracting hop solids, it is envisioned that any polar solvent will work. We envision the preferred extraction solvents to include water, isopropanol, methanol, dichloromethane, trichloromethane, n-butanol, ethyl acetate, ethylene dichloride, and trichloroethylene.

The amount of hop solids extract to be added depends upon the amount of flavoring desired in the resulting beverage and the concentration of the desired extract components in the extraction solvent. Typically, the amount of hop solids extract added will range from 10 ppm to 10,000 ppm, more preferably 100 ppm to 5,000 ppm, and most preferably from 1,000 ppm to 3,000 ppm (based on the extraction of a given amount of hop solids).

CO₂ extraction of Cascade hops. The hops were extracted with liquid CO₂ at 10°C and 4.83×10⁶ Pa (50°F and 700 psi). The residue (the hop solids) was retained for further processing.

Preparation of an ethanol extract of hop solids. A sample of Cascade hop solids was obtained from the hop pilot plant liquid CO₂ extractor, runs 640-641. The hop solids were greatly depleted of alpha acids (only 0.3% left), beta acids, and hop oils. The hop solids are normally treated as a waste fraction, considered as having no value. Normally only the CO₂ extract is considered as having value.

110.9 grams of hop solids were slurried with 576 grams of 95% v/v ethanol and poured into a glass chromatography column. The ethanol was allowed to slowly percolate at ambient temperature and pressure through the bed of hop solids. The filtered eluate (dark green colored ethanol extract) was collected (yield 350.6 grams wet weight).

Preparation of beer kettle hopped with the ethanol extract. A sample of Milwaukee Brewery wort from the cooler (which contained a negligible amount of hops products) was brought to the lab for a re-boil. 18.2 kg of cooler wort and 2.0 kg water were brought to a boil in a kettle. 95.9 grams of ethanol extract (1,000 ppm based on hop solids) (see above) were added at 60 minutes before knockout. At 30 minutes before knockout, another 95.9 grams of ethanol extract (1,000 ppm based on hop solids) were added to the kettle. The knockout wort 16.8 kg was cooled and pitched with 12 million yeast cells/ml, aerated and fermented at 15.6°C (60°F) for 7 days. The young beer was primary filtered and finished to a 3.65% w/w alcohol. The resulting beer was deemed to have a desirable estery/hoppy flavor, free of dry hop flavor as evaluated by the fifteen member expert round table as shown in Table 10.

### 2. Water Extract of Hop Solids

### Example 4

Water can also be used to obtain an extract of the hop solids which, when added before the fermentation step, produces a desirable hop flavored beverage. The water extract of the hop solids is hereinafter referred to as "hop tea." Likewise, the hop tea may be fermented and used to produce a desirable hop flavored beverage. The fermented hop tea may be used as is, or it may be further processed by ultrafiltration (through a 300 nominal molecular weight cutoff membrane) whereby the permeate may be used as the hop flavoring. Gases from the hop tea fermenter may also be cold-trapped, whereby the condensate may be used as the hop flavoring.

One advantage of using a fermented hop tea (or permeate/condensate) is that it may be added after fermentation to produce a desirable hop flavored beverage. Thus, the fermented hop tea may be added post-fermentation to customize any desired level of hop flavoring to the finished hop flavored beverage.

Referring now to Tables 11, 12 and 13 below, a number of hop flavored beverages were made using the above hop teas and evaluated by a fifteen member sensory panel. Nine flavor attributes were rated in replicate using the QDA method. Mean scores are based on a 24 point linear scale. The control sample was an unhopped pale malt lager beer.

Not within scope of appended claims: Samples 2, 7 and 9. Sample #2 was a hopped beer made with hop solids according to the principles in Examples 1 and 2, above (hop solids added at 3,000 ppm). Not within scope of appended claims: Samples 2, 7 and 9. Samples #7 and #9 are hopped beers made with hop solids at 15,000 ppm but blended with unhopped stock beer for a final 3,000 ppm hop solids equivalent. Samples #3 through #6 are hopped beers made with hop tea (produced by the exhaustive extraction of hop solids with water at either 76.7°C (170°F) or boiling) added at a 3,000 ppm hop solids equivalent.

Sample #8 is a hopped beer made by adding post-fermentation a fermented hop tea to a 3,000 ppm hop solids equivalent. The hop tea was pitched with 25 x 10⁶ cells/ml of standard brewing yeast and was fermented at 15.6°C (60°F) for 10 days. using minimal media (Difco yeast N base and glucose).
BFKO means "before knock out." SCO₂ means hops extracted with supercritical CO₂. LCO₂ means hops extracted with liquid CO₂. MR means a pale malt lager beer.

**Table 11**

| Sample ID | Description |
|---|---|
| Control | Control - Unhopped |
| *#2 | Standard - Steiner Galena SCO₂ Hop Solids - 3000 ppm 60 min. BFKO |
| #3 | Experimental - Hop Tea added 60 min. BFKO - 3000 ppm equivalent (Steiner Galena SCO₂ Hop Solids extracted with BOILING water - 30,000 ppm) |
| #4 | Experimental - Hop Tea added 60 min. BFKO - 3000 ppm equivalent (Steiner Galena SCO₂ Hop Solids extracted with 76.7°C (170°F) water - 30,000 ppm) |
| #5 | Experimental - Hop Tea added 0 min. BFKO - 3000 ppm equivalent (Steiner Galena SCO₂ Hop Solids extracted with 76.7°C (170°F) water - 30,000 ppm) |
| #6 | Experimental - Hop Tea added at Fermentation - 3000 ppm brew kettle equivalent (Steiner Galena SCO₂ Hop Solids. extracted with 76.7°C (170°F) water - 30,000 ppm) |
| *#7 | Experimental - Fermented Galena hop solids hopped beer blended post Fermentation - 3000 ppm brew kettle equivalent (Steiner Galena SCO₂ Hop Solids added to MR at 15,000 ppm and fermented - blended 85.3% MR stock) |
| #8 | Experimental - Fermented hop tea added post Fermentation - 3000 ppm brew kettle equivalent (Steiner Cascade SCO₂ Hop Solids extracted with boiling water - 30,000 ppm and diluted to 15,000 ppm with water and mininal medium containing 10% Dextrose final) |
| *#9 | Experimental - Fermented Cascade hop solids hopped beer blended post Fermentation - -3000 ppm brew kettle equivalent (Miller Pilot Cascase LCO₂ Hop Solids added to MR at 15,000 ppm and fermented - blended with 85.3% MR stock) |

| | |
|---|---|
| *Not within scope of the appended claims. | |

**Table 12**

| ANALYSIS OF VARIANCE | | | | | | | | | |
|---|---|---|---|---|---|---|---|---|---|
| Mean Score* | | | | | | | | | |
| Attribute | Control | **#2 | #3 | #4 | #5 | #6 | **#7 | F-Value | Level of Significance |
| Aroma Strength | 10.6^{b} | 11.5^{a} | 11.1^{a} | 11.8^{a} | 11.5^{a} | 11.7^{a} | 12.1^{a} | 2.21 | 95.3% |
| Fruity/ Estery | 8.3^{b} | 10.0^{a} | 9.7^{a} | 9.7^{a} | 9.7^{a} | 9.7^{a} | 8.7^{ab} | 3.46 | 99.7% |
| Hop Charater | 8.4^{a} | 9.5^{a} | 8.6^{a} | 8.8^{a} | 9.0^{a} | 8.9^{a} | 8.2^{a} | 1.47 | NSD |
| Malty/ Grainy | 7.9^{a} | 7.4^{a} | 7.5^{a} | 7.1^{a} | 7.1^{a} | 7.5^{a} | 7.6^{a} | 0.66 | NSD |
| Sulphidic/ tic | 5.9^{ab} | 4.9^{b} | 5.4^{ab} | 5.0^{ab} | 5.3^{ab} | 6.0^{a} | 5.5^{ab} | 2.24 | 95.6% |
| Diacetyl | 3.6^{b} | 4.3^{b} | 4.8^{b} | 4.5^{b} | 4.5^{b} | 4.0^{b} | 8.0^{a} | 9.70 | 99.9% |
| Bitterness | 9.9^{a} | 10.4^{a} | 9.7^{a} | 10.4^{a} | 9.7^{a} | 10.3^{a} | 10.3^{a} | 1.53 | NSD |
| Body | 10.2^{a} | 10.8^{a} | 10.3^{a} | 10.2^{a} | 10.2^{a} | 10.0^{a} | 10.9^{a} | 1.52 | NSD |
| Aftertaste | 10.1^{a} | 10.4^{a} | 10.3^{a} | 11.0^{a} | 10.2^{a} | 10.7^{a} | 10.9^{a} | 1.71 | NSD |
| N = 21 | | | | | | | | | |
| Comments: #2 - fruity -2 panelists - winey - 2 panelists #5 - oxidized - 2 panelists #6 - oxidized -5 panelists | | | | | | | | | |
| *Mean scores sharing a common letter are not significantly different. | | | | | | | | | |
| ** Not within scope of appended claims | | | | | | | | | |

**Table 13**

| ANALYSIS OF VARIANCE | | | | | |
|---|---|---|---|---|---|
| Mean Score* | | | | | |
| Aunbute | Control | #8 | #9 ** | F-Value | Level of Significance |
| Aroma Strength | 11.0^{c} | 13.5^{a} | 12.2^{b} | 21.48 | 99.9% |
| Fruity/Estery | 7.9^{b} | 9.4^{a} | 9.3^{a} | 7.75 | 99.9% |
| Hop Character | 8.2^{b} | 3.6^{b} | 9.6^{a} | 6.96 | 99.8% |
| Malty/Grainy | 7.2^{b} | 7.1^{b} | 8.0^{a} | 3.85 | 97.4% |
| Sulphidic/tic | 5.6^{a} | 5.6^{a} | 5.9^{a} | 0.44 | NSD |
| Diacetyl | 3.3^{b} | 10.4^{a} | 4.8^{b} | 36.83 | 99.9% |
| Bilierness | 9.5^{c} | 10.6^{b} | 12.1^{a} | 26.72 | 99.9% |
| Body | 9.9^{b} | 10.7^{a} | 11.3^{a} | 6.52 | 99.8% |
| Aftertaste | 9.7^{b} | 12.1^{a} | 11.9^{a} | 12.80 | 99.9% |
| N = 39 | | | | | |
| Comments: #8 - diacetyl - 8 panelists - spoiled 4 panelists | | | | | |
| * Mean scores shanng a common letter are not significantly different | | | | | |
| ** Not within scope of appended claims | | | | | |

Tables 11 through 13 show that a hop tea or fermented hop tea may be used to produce a hop flavored beverage having a desirable aroma, fruity/estery attributes, and a favorable hop character. Depending on the desired attributes of the finished hop flavored beverage, the hop solids, hop tea, or fermented hop tea can be added at 0.29 to 21.4 g/litre (0.1 to 7.5 lbs/barrel) based on hop solids equivalent.

Other considerations. Although the present invention has been described wherein the ethanol extract is added to the kettle boil, it is also possible to add the polar solvent extract post kettle but prior to fermentation.

The preferred percentage depletion of alpha acids, beta acids, or hop oils in the hop solids (compared to the original whole hop material) is >80%, >80%, >80%, respectively. The most preferred ranges are ≥90%, ≥90%, ≥90%, respectively.

The polar extraction solvent also can be a mixture of ethanol and water in any combination.

### Conclusions

The foregoing test results indicate that there was essentially no. kettle hopped flavor difference between the light stable beer made by the method of the present invention and the light unstable beer made with hops. The beers made by the practice of the present invention had acceptable taste and foam characteristics, as well as light stability due to the low level of iso-alpha acids. Thus, it is possible by the practice of the method of the present invention to prepare a light stable, full hop flavored beer using hop solids and extracts of hop solids.

It will be apparent to those skilled in the art that the method of the present invention, in addition to being novel and useful, is also simple and economical. For example, only conventional brewing techniques and equipment are used and the useful flavoring constituents of the hop solids are hot wasted.

The hop solids preferred for use in the method of the present invention are the hop solids obtained after the liquid carbon dioxide extraction of hops under 278 K to 300 K and 3447 kPa to 6895 kPa (40° to 80°F and 500 - 1000 psig). The liquid carbon dioxide extraction of hops is described in U.S. Patent No. 4,344,978. Other hop solids that can be used are those obtained by the extraction of hops with supercritical CO₂ at a temperature of 311 K to 339 K (100° - 150°F) and pressure of 7584 kPa to 20684 kPa (1100 - 3000 psig.), or by the practice of the extraction methods of U.S. Patents Nos. 3,798,332; 4,002,683; and others.

Representative of the different types of hops that can be used to prepare the hop extract and hop solids are Cascade hops and Galena hops. However, other varieties of hops also can be used.

The amount of hop solids extract to be added depends upon the amount of kettle hop flavor desired in the resulting beverage. Normally, if the hop solids extract are used alone the amount employed will be equivalent to the equivalent amount of whole hops that would be employed for the same flavor whole hopped beer. When the preferred composition containing both hop solids and HCF are used the amount employed will be about 0.5x to about 3x or more of the amount of whole hops that would be employed.

For example, an exhaustive extraction of hop solids with boiling ethanol resulted in about a 28% by weight extract on a dry basis. Also, an exhaustive extraction of hop solids with boiling water resulted in about a 45% by weight extract on a dry basis. Both of these extracts produce a fully kettle hop flavored beverage.

### Industrial Applicability

The invention is useful for providing a fully kettle hop flavored beverage rich in positive hop components (fruity, estery, hoppy) and devoid of negative ones (dry hop, green, tea-like, hop oil-like).

## Claims

1. A method of making a hop flavored beverage from a fermentable growth media comprising the steps of:
adding to the media, prior to bio-conversion, an extract of hop solids as the sole hopping material; and
bio-converting the media to form the hop flavored beverage, wherein the hop solids are the residue of a first extraction of hops to remove substantially all alpha acids, beta acids, and hop oils, wherein the first extraction of hops is a CO₂ extraction of hops, and wherein the hop solids have no more than .3% w/w alpha acids.

2. The method of claim 1, wherein the hop solids are extracted with a polar solvent.

3. The method of claim 2, wherein the polar solvent is selected so that it extracts essentially no dry hop flavor components from the hop solids.

4. The method of claim 2, wherein the polar solvent is selected from the group consisting of water, ethanol, isopropanol, methanol, dichloromethane, trichloromethane, n-butanol, ethyl acetate, ethylene dichloride, and trichloroethylene.

5. The method of claim 4, wherein the polar solvent is ethanol.

6. The method of claim 4, wherein the polar solvent is water.

7. A kettle hop flavored beer having enhanced light stability in a clear or green glass bottle which is prepared by the method of claim 1.

8. A hop flavored beverage prepared by the method of any one of claims 1, 3, 5 or 6.

9. A method of making a hop flavored beverage from a fermentable growth media comprising the steps of:
bio-converting the media; and
adding to the converted media a fermented water extract of hop solids as the sole hopping material, wherein the hop solids are the residue of a first extraction of hops to remove substantially all alpha acids, beta acids, and hop oils, wherein the first extraction of hops is a CO₂ extraction of hops, and wherein the hop solids have no more than .3% w/w alpha acids.

10. A hop flavored beverage prepared by the method of claim 9.

11. A hop flavoring agent for beverages consisting essentially of an extract of hop solids as the sole hopping material, wherein the hop solids are the residue of a first extraction of hops to remove substantially all alpha acids, beta acids, and hop oils, wherein the first extraction of hops is a CO₂ extraction of hops, and wherein the hop solids have no more than .3% w/w alpha acids.

12. The hop flavoring agent of claim 11, wherein the hop flavoring agent comprises a polar solvent extract of hop solids.

13. The hop flavoring agent of claim 11, wherein the extract of hop solids is a fermented water extract of hop solids.

## Patentansprüche

1. Verfahren zum Herstellen eines mit Hopfen gewürztes Getränkes aus gärfähigem Nährmedium, umfassend die Schritte:
Zusetzen eines Extraktes von Hopfen-Trockensubstanz als das einzige Würzmaterial zu dem Medium vor der Bio-Umwandlung; und
biologisches Umsetzen des Mediums, um ein mit Hopfen gewürztes Getränk zu erzeugen, wobei die Hopfen-Trockensubstanz der Rückstand einer ersten Extraktion von Hopfen zur Entfernung weitgehend aller Alphasäuren, Betasäuren und Hopfenöle ist, wobei die erste Extraktion von Hopfen eine CO₂-Extraktion von Hopfen ist und wobei die Hopfen-Trockensubstanz nicht mehr als 0,3% (Gewicht/Gewicht) Alphasäuren hat.

2. Verfahren nach Anspruch 1, bei welchem die Hopfen-Trockensubstanz mit einem polaren Lösemittel extrahiert ist.

3. Verfahren nach Anspruch 2, bei welchem das polare Lösemittel so ausgewählt ist, dass es im wesentlichen keine trockenen Hopfenaroma-Komponenten aus der Hopfen-Trockensubstanz extrahiert

4. Verfahren nach Anspruch 2, bei welchem das polare Lösemittel ausgewählt ist aus der Gruppe, bestehend aus Wasser, Ethanol, Isopropanol, Methanol, Dichlormethan, Trichlormethan, n-Butanol, Ethylacetat, Ethylendichlorid und Trichlorefhylen.

5. Verfahren nach Anspruch 4, bei welchem das polare Lösemittel Ethanol ist.

6. Verfahren nach Anspruch 4, bei welchem das polare Lösemittel Wasser ist.

7. Mit Würzhopfen gewürztes Bier mit verbesserter Lichtbeständigkeit in einer klaren oder grünen Glasflasche, das nach dem Verfahren nach Anspruch 1 hergestellt ist.

8. Mit Würzhopfen gewürztes Getränk, hergestellt nach dem Verfahren nach einem der Ansprüche 1, 3, 5 oder 6.

9. Verfahren zum, Herstellen eines mit Hopfen gewürztes Getränkes aus gärfähigem Nährmedium, umfassend die Schritte:
biologisches Umsetzen des Mediums; und
Zusetzen eines vergorenen Wasserextraktes von Hopfen-Trockensubstanz als das einzige Würzmaterial zu dem umgesetzten Medium wobei die Hopfen-Trockensubstanz der Rückstand einer ersten Extraktion von Hopfen zur Entfernung weitgehend aller Alphasäuren, Betasäuren und Hopfenöle ist, wobei die erste Extraktion von Hopfen eine CO₂-Extraktion von, Hopfen ist und wobei die Hopfen-Trockensubstanz nicht mehr als 0,3% (Gewicht/Gewicht) Alphasäuren hat.

10. Mit Würzhopfen gewürztes Getränk, hergestellt nach dem Verfahren nach Anspruch 9.

11. Hopfenwürzmittel für Getränke, im wesentlichen bestehend aus einem Extrakt, von Hopfen-Trockensubstanz als das einzige Würzmaterial, wobei die Hopfen-Trockensubstanz der Rückstand einer ersten Extraktion von Hopfen zur Entfernung weitgehend aller Alphasäuren, Befasäuren und Hopfenöle ist, wobei die erste Extraktion von Hopfen eine CO₂-Extraktion von Hopfen ist und wobei die Hopfen-Trockensubstanz nicht mehr als 0,3% (Gewicht/Gewicht) Alphasäuren hat.

12. Hopfenwürzmittel nach Anspruch 11, wobei das Hopfenwürzmittel einen polaren Lösemittelextrakt von Hopfen-Trockensubstanz aufweist

13. Hopfenwürzmittel nach Anspruch 11, wobei der Extrakt der Hopfen-Trockensubstanz ein vergorener Wasserextrakt von Hopfen-Trockensubstanz ist.

## Revendications

1. Procédé de fabrication d'une boisson aromatisée au houblon à partir d'un milieu de croissance fermentable comprenant les étapes consistant à :
ajouter au milieu, avant la conversion biologique, un extrait de matières solides de houblon comme unique matière de houblonnage ; et
effectuer une conversion biologique du milieu pour former la boisson aromatisée au houblon, dans lequel les matières solides de houblon sont le résidu d'une première extraction de houblons pour enlever pratiquement la totalité des acides alpha, des acides bêta et des huiles de houblon, dans lequel la première extraction des houblons est une extraction au CO₂ de houblons et dans lequel les matières solides de houblon n'ont pas plus de 0,3 % poids/poids d'acides alpha.

2. Procédé de la revendication 1, dans lequel on effectue l'extraction des matières solides de houblon avec un solvant polaire.

3. Procédé de la revendication 2, dans lequel le solvant polaire est choisi de façon à ce qu'il n'extraie des matières solides de houblon essentiellement aucun composant sec de l'arôme de houblon.

4. Procédé de la revendication 2, dans lequel on choisit le solvant polaire dans le groupe constitué de l'eau, de l'éthanol, de l'isopropanol, du méthanol, du dichlorométhane, du trichlorométhane, du n-butanol, de l'acétate d'éthyle, du dichlorure d'éthylène et du trichloréthylène.

5. Procédé de la revendication 4, dans lequel le solvant polaire est l'éthanol.

6. Procédé de la revendication 4, dans lequel le solvant polaire est l'eau.

7. Bière fabriquée en chaudière aromatisée au houblon ayant une stabilité à la lumière renforcée dans une bouteille en verre transparent ou vert, laquelle est préparée au moyen du procédé de la revendication 1.

8. Boisson aromatisée au houblon préparée au moyen du procédé de l'une quelconque des revendications 1, 3, 5 ou 6.

9. Procédé de fabrication d'une boisson aromatisée au houblon à partir d'un milieu de croissance fermentable comprenant les étapes consistant à :
effectuer une conversion biologique du milieu ; et
ajouter au milieu converti un extrait à l'eau fermenté de matières solides de houblon comme unique matière de houblonnage, dans lequel les matières solides de houblon sont le résidu d'une. première extraction de houblons pour enlever pratiquement la totalité des acides alpha, des acides bêta et des huiles de houblon, dans lequel la première extraction des houblons est une extraction au CO₂ de houblons et dans lequel les matières solides de houblon n'ont pas plus de 0,3 % poids/poids d'acides alpha.

10. Boisson aromatisée au houblon préparée au moyen du procédé de la revendication 9.

11. Agent aromatisant au houblon pour des boissons constitué essentiellement d'un extrait de matières solides de houblon comme unique matière de houblonnage, dans lequel les matières solides de houblon sont le résidu d'une première extraction de houblons pour enlever pratiquement la totalité des acides alpha, des acides bêta et des huiles de houblon, dans lequel la première extraction des houblons est une extraction au CO₂ de houblons et dans lequel les matières solides de houblon n'ont pas plus de 0,3 % poids/poids d'acides alpha.

12. Agent aromatisant au houblon de la revendication 11, dans lequel l'agent aromatisant au houblon comprend un extrait avec un solvant polaire de matières solides de houblon.

13. Agent aromatisant au houblon de la revendication 11, dans lequel l'extrait de matières solides de houblon est un extrait à l'eau fermenté de matières solides de houblon.
